# EUROPÄISCHE PATENTSCHRIFT

(11) **EP 4 140 270 B1**
(45) Veröffentlichungstag und Bekanntmachung des Hinweises auf die Patenterteilung: **20.03.2024**
(21) Anmeldenummer: 22185917.6
(22) Anmeldetag: 20.07.2022
(51) Int. Cl.: A01B 49/02, A01B 63/22, A01B 49/06, A01B 61/04, A01B 71/08, A01B 73/04, A01B 63/32

(54) **LANDWIRTSCHAFTLICHE ARBEITSMASCHINE**
AGRICULTURAL MACHINE
MACHINE DE TRAVAIL AGRICOLE

(30) Priorität: 30.08.2021 DE 202021104659 U
(43) Veröffentlichungstag der Anmeldung: 01.03.2023
(73) Patentinhaber: Pöttinger Landtechnik GmbH, 4710 Grieskirchen (AT)
(72) Erfinder: BERGER, Thomas, 4710 Grieskirchen (AT); LOHER, Felix, 4710 Grieskirchen (AT); MEINDLHUMER, Wilhelm, 4710 Grieskirchen (AT); STADLBAUER, Franz, 4710 Grieskirchen (AT)
(74) Vertreter: Thoma, Michael

(56) Entgegenhaltungen:
- DE-A1- 3 340 607
- DE-A1- 3 422 254
- DE-A1-102010 005 183

## Beschreibung

Die vorliegende Erfindung betrifft eine landwirtschaftliche Arbeitsmaschine, insbesondere in Form eines Bodenbearbeitungsgeräts wie Egge oder Grubber, mit einem Maschinenrahmen, einem am Maschinenrahmen aufgehängten Arbeitsaggregat mit zumindest einer Reihe nebeneinander angeordneten Arbeitswerkzeugen, sowie einem einachsigen Nach- oder Vorläuferfahrwerk, umfassend eine Walze oder ein Transportrad, wobei das Nachläuferfahrwerk mittels einer ein Viergelenk bildenden Lenkeranordnung an dem Arbeitsaggregat höhenveränderbar relativ zum Arbeitsaggregat angelenkt ist.

Bei diversen landwirtschaftlichen Arbeitsmaschinen sind die Arbeitsaggregate mit nach- oder vorauslaufenden Walzen oder Transporträdern verbunden, die dazu genutzt werden können, die Arbeitstiefe der Arbeitswerkzeuge einzustellen, indem die Walze oder die Transporträder relativ zum Arbeitsaggregat höhenverstellt werden, oder auch eigene Bodenbearbeitungsaufgaben übernehmen können, wie beispielsweise das Nachverdichten bzw. -glätten des Bodens oder das Zerkrümeln größerer Erdbrocken. Gegebenenfalls kann das Nachläuferfahrwerk auch dazu genutzt werden, das Arbeitsaggregat für das Vorgewende oder den Transport mit ausreichender Bodenfreiheit auszuheben.

Bei einachsigen Nachläuferfahrwerken wie einer Packerwalze, einer Ringreifenwalze oder eben auch Transporträdern neigt das Nachläuferfahrwerk zu Stößen beim Überfahren von Bodenwellen bzw. -unebenheiten, die über das Viergelenk auf das Arbeitsaggregat übertragen werden und neben hohen Beanspruchungen auch ein unruhiges Laufen der Arbeitswerkzeuge verursachen kann, wenn diese beispielsweise durch Stöße vom Nachläuferfahrwerk her ruckhaft in den Boden getrieben werden. Auch umgekehrt können beispielsweise beim Auflaufen der Bodenbearbeitungswerkzeuge auf Hindernisse stoßhafte Belastungen auf die Nachläufereinheit übertragen werden.

Um solche stoßhaften Belastungen abzumildern, ist auch schon angedacht worden, zwischen den Vorwerkzeugen und der Nachläuferwalze Dämpfungssysteme vorzusehen, die eigene Dämpfungszylinder zusätzlich zum Höheneinstellzylinder umfassen können oder auch in den Einstellzylinder integriert werden können, der mit einer dämpfenden Funktion versehen werden kann. Solche Dämpfungssysteme sind in ihrer Wirksamkeit jedoch abhängig von der Richtung der Stöße. Zudem kommt durch die für das Dämpfungssystem notwendigen zusätzlichen Teile Gewicht hinzu, das ein leichtfüßiges Ansprechen des Systems beeinträchtigt und den Kosten- und Montageaufwand in die Höhe treibt.

Es wurde auch schon angedacht, die Nachläufereinheiten mehrachsig nach Art eines Bogey-Fahrwerks auszubilden und beispielsweise hintereinander zwei Walzen anzuordnen und an einem jochartigen Träger aufzuhängen, der selbst über ein Federbein am Arbeitsaggregat angelenkt ist, vgl. beispielsweise die aus der Praxis bekannte Zinkenegge HV-GP der Firma Quivogne oder die US 2020/0390020 A1. Solche Bogey-artigen Doppelwalzen können durch Verkippen des jochartigen Walzenträgers beim Überfahren von Bodenwellen entstehenden Höhenversatz sozusagen halbieren, da beispielsweise beim Auffahren der vorderen Walze auf eine Bodenwelle die hintere Walze noch auf dem alten Niveau läuft und wenn die hintere Walze auf die Bodenwelle aufläuft, die vordere Walze in der Regel schon wieder das vorherige Niveau erreicht hat. Andererseits machen solche mehrachsigen Nachläufereinheiten das Gerät insgesamt deutlich schwerer und vor allen Dingen axial auch länger, was sich nicht nur auf die Wendigkeit negativ auswirkt, sondern auch die Bodenanpassung selbst beeinträchtigt. Zudem ist es schwierig, die Bogey-artigen Doppelwalzen straff abzustimmen, da der jochartige Walzenträger aus seiner Neutralstellung, die er beim Aufstand auf einer ebenen Bodenfläche einnimmt, in unterschiedliche bzw. entgegengesetzte Richtungen verkippt, je nachdem, ob die vorauslaufende Walze in eine Senke einfährt oder auf einen Hügel auffährt. Federeinrichtungen zum Rückstellen des jochartigen Walzenträgers in die Ausgangsstellung bauen Rückstellkräfte regelmäßig erst nach einem Auslenken auf, auch wenn die Federn vorgespannt eingebaut sind, da sich die in entgegengesetzten Richtungen wirksamen Federn in der genannten Ausgangsstellung neutralisieren und insofern der jochartige Walzenträger um die Ausgangsstellung herum ohne nennenswerte Rückstellkräfte verkippen kann, was zu einem insgesamt eher labilen Fahrverhalten führt.

Aus der Druckschrift DE 34 22 254 A1 ist eine landwirtschaftliche Arbeitsmaschine mit einem Maschinenrahmen, mit einem am Maschinenrahmen aufgehängten Arbeitsaggregat und mit einem einachsigen Nachläuferfahrwerk mit einer Walze bekannt. Das Nachläuferfahrwerk ist mittels einer ein Viergelenk bildenden Lenkeranordnung am Arbeitsaggregat höhenveränderbar angelenkt.

Der vorliegenden Erfindung liegt die Aufgabe zugrunde, eine verbesserte landwirtschaftliche Arbeitsmaschine der genannten Art zu schaffen, die Nachteile des Standes der Technik vermeidet und letzteren in vorteilhafter Weise weiterbildet. Insbesondere soll ein sanfter Nachlauf einer einachsigen Nachlaufeinheit erreicht werden und Stöße zwischen Nachläufereinheit und Arbeitsaggregat unabhängig von deren Richtung abgemildert werden, ohne hierfür Gewichtsnachteile und Kollisionsprobleme in Kauf zu nehmen.

Erfindungsgemäß wird die genannte Aufgabe durch eine landwirtschaftliche Arbeitsmaschine gemäß Anspruch 1 gelöst. Bevorzugte Ausgestaltungen der Erfindung sind Gegenstand der abhängigen Ansprüche.

Es wird also vorgeschlagen, in das Viergelenk eine Dämpfungsfunktion zu integrieren, sodass das Viergelenk selbst Stöße und Vibrationen zwischen Nachläufereinheit und Arbeitsaggregat dämpfen kann. Erfindungsgemäß ist das Viergelenk als Dämpfungseinrichtung ausgebildet, wobei zumindest einer der Lenker der das Viergelenk bildenden Lenkeranordnung als längenveränderbares Dämpferbein ausgebildet ist. Hierdurch kann das Viergelenk eine Doppelfunktion ausführen, nämlich einerseits die Beweglichkeit zwischen Nachläuferfahrwerk und Arbeitsaggregat führen und steuern sowie andererseits stoßhafte Belastungen zwischen Nachläuferfahrwerk und Arbeitsaggregat dämpfen. Hierdurch können nicht nur zusätzliche Dämpfersysteme separat vom Viergelenk eingespart werden, sondern auch Stöße gedämpft werden, die im Wesentlichen parallel zur Längsrichtung der Lenker des Viergelenks gehen. Während solche lenkerparallelen Stöße bislang von separaten Dämpfersystemen kaum gedämpft werden konnten, da die Lenker selbst die Stöße übertragen, kann bei der von der Erfindung vorgeschlagenen Dämpferintegration in die Lenkeranordnung der als längenveränderbares Dämpferbein ausgebildete Lenker auch solche näherungsweise lenkerparallelen Stoßbelastungen abfangen, indem der Lenker sich verkürzt. Gleichzeitig kann Gewicht eingespart und das Kollisionspotenzial verringert werden, wenn beispielsweise ein Arbeitsaggregatsteil zusammen mit dem zugeordneten Nachläuferfahrwerk in eine aufrechte Transportstellung ausgehoben wird und in der abgesenkten Arbeitsstellung nach oben überstehende Komponenten in der genannten Transportstellung dann innenseitig vorstehen würden.

In Weiterbildung der Erfindung kann der das Dämpferbein bildende Lenker eine vorgespannte Ausgangsstellung haben, aus der der besagte Lenker nur verkürzbar ist, oder je nach Ausbildung der Lenkeranordnung und der davon bestimmten Kinematik der Nach- oder Vorläufereinheit, nur gelängt werden kann. Der das Dämpferbein bildende Lenker kann hierdurch im normalen Arbeitsbetrieb ohne stärkere Stoßbelastungen oder mit nur sanften Stößen eine vorbestimmte Länge halten, sodass die Position bzw. Höhenbewegung des Nachläuferfahrwerks relativ zum Arbeitsaggregat präzise vorgegeben bzw. straff geführt werden kann. Gleichzeitig stellt das Dämpferbein sozusagen von Anfang an die volle Dämpfungskraft zur Verfügung, anders als dies bei Federteleskopbeinen der Fall ist, die aus der unausgelenkten Ausgangsstellung heraus sowohl gelängt als auch gekürzt werden können.

In Weiterbildung der Erfindung kann das einen Lenker der Lenkeranordnung bildende Dämpferbein als Fluiddämpfer ausgebildet sein, der pneumatisch oder hydraulisch dämpfend arbeitet. Insbesondere kann das Dämpferbein eine Kolbenzylindereinheit mit einer Verdrängerkammer aufweisen, aus der bei Längenänderungen des Dämpferbeins Fluid, insbesondere Hydrauliköl, über einen strömungsrestriktiven Verdrängungskanal zu verdrängen ist. Beispielsweise kann der in einem Zylinder verschiebbar aufgenommene Kolben eine Perforation oder Bohrungen oder zumindest einen solchen Verdrängerkanal aufweisen, sodass das Dämpfungsfluid durch den Kolben hindurch zu verdrängen ist.

In bevorzugter Weiterbildung der Erfindung kann die genannte Verdrängerkammer aber auch über einen Verdrängerkanal durch die Zylinderwandung hindurch, insbesondere durch eine axiale Endkappe des Zylinders hindurch mit einem Reservoir verbunden sein, insbesondere mit einem Druckspeicher, der den Fluiddruck in der Verdrängerkammer auf einem bestimmten Druckniveau hält und hierdurch auch gleichzeitig eine Vorspannung des Dämpferbeins in die zuvor genannte Ausgangsstellung bereitstellen kann. Erfährt das Nachläuferfahrwerk und/oder das Arbeitsaggregat Stoßbelastungen, kann der Lenker sich verkürzen, wodurch der sich bewegende Zylinder aus der genannten Verdrängerkammer Druckfluid über den Verdrängerkanal in den Druckspeicher verdrängen kann, sodass das Viergelenk eine entsprechende Dämpfung der Stoßbelastung bewirkt.

Alternativ oder zusätzlich zu einem Fluiddämpfer kann der längenveränderbare Lenker aber auch mechanisch gedämpft werden, beispielsweise durch ein Reibflächenpaar nach Art einer Bremse, das nur unter Überwindung der Reibungskräfte und damit dissipativem Energieabbau eine Verkürzung bzw. Längenänderung des Lenkers zulässt. Alternativ oder zusätzlich kann dem längenveränderbaren Lenker aber auch eine mechanische Federeinrichtung zugeordnet sein, beispielsweise in Form einer Schraubenfeder, die eine Vorspannung in die zuvor genannte Ausgangsstellung bewirken und stoßhafte Belastungen abfedern kann.

Alternativ oder zusätzlich kann ein mechanisch gedämpfter Lenker auch eine Rückstellfeder aufweisen, mittels derer der Lenker in seine Ausgangsstellung vorspannbar ist, aus der der Lenker dann nur verkürzbar ist. Vorteilhafterweise kann der längenveränderbare Lenker hinsichtlich der Vorspannkraft der Feder einstellbar ausgebildet sein, beispielsweise mithilfe einer Längeneinstellvorrichtung zum Voreinstellen der Länge der Feder, was beispielsweise durch eine Schraubhülse oder einen Schraubboden an einem Zylinder bewerkstelligt werden kann, indem die Feder aufgenommen sein kann.

Vorteilhafterweise kann das Dämpferbein eine teleskopierbare Kolbenzylindereinheit umfassen, deren Kolben in eine Ausgangsstellung vorgespannt ist, aus der die Kolbenzylindereinheit nur verkürzbar ist, wobei der genannte Kolben pneumatisch oder hydraulisch oder eben auch mechanisch in die genannte Ausgangsstellung vorgespannt sein kann. Auch Mischformen umfassend eine mechanische Feder und eine pneumatische oder hydraulische Druckbeaufschlagung sind möglich.

In Weiterbildung der Erfindung können beiden Lenker eines Lenkerpaars, welches das genannte Viergelenk bildet, in der genannten Weise als längenveränderbares Dämpferbein ausgebildet sein. Hierdurch können insbesondere Stöße effektiv abgefedert werden, die näherungsweise parallel zur Längsachse der Lenker gehen. Alternativ hierzu kann es aber ausreichend sein, nur einen der beiden Lenker eines Viergelenks-Lenkerpaares in der genannten Weise als längenveränderbares Dämpferbein auszubilden, während der andere Lenker starr ausgebildet sein kann. Durch die Anordnung der Lenker im Viergelenk ist es ausreichend, einen der Lenker dämpfend auszubilden, um insgesamt eine Dämpfungswirkung durch das Viergelenk zu erzielen.

Ist in der genannten Weise nur einer der Lenker eines Lenkerpaares als längenveränderbares Dämpferbein ausgebildet, kann ein oberer Lenker das längenveränderbare Dämpferbein bilden. Grundsätzlich wäre es allerdings auch möglich, den unteren Lenker als längenveränderbares Dämpferbein auszubilden.

In vorteilhafter Weiterbildung der Erfindung können die beiden Lenker eines Viergelenks-Lenkerpaares zumindest näherungsweise parallel zueinander angeordnet sein, vorzugsweise wenn sich die Nach- oder Vorläufereinheit in einer mittleren Höhenstellung relativ zum Arbeitsaggregat befindet.

Insbesondere kann in Weiterbildung der Erfindung die das Viergelenk bildende Lenkeranordnung eine Parallelogramm-Lenkeranordnung sein, bei der zwei gleichlange Lenker parallel zueinander angeordnet sind, wobei die gleiche Länge der Lenker bei Betrachtung der unverkürzten Ausgangsstellung des längenveränderbaren Dämpferbeins gegeben sein kann.

In Weiterbildung der Erfindung kann das Arbeitsaggregat und das mittels des Viergelenks zugeordnete Nachlauffahrwerk mit der genannten Walze und/oder den Transporträdern jeweils einen klapp- oder schwenkbaren Aggregatsteil bzw. Fahrwerksteil aufweisen, die zusammen aus einer Arbeitsstellung in eine Vorgewende- und/oder Transportstellung verbringbar sind, um die Arbeitsbreite der Maschine beispielsweise für das Vorgewende bzw. den Straßentransport reduzieren zu können. Insbesondere können die genannten Aggregats- und Fahrwerksteile um eine liegende, in Fahrtrichtung weisende Schwenkachse aus einer abgesenkten Arbeitsstellung in eine näherungsweise aufrechte Transportstellung aufgeschwenkt werden. Insbesondere können die in die genannte Vorgewende- und/oder Transportstellung verbringbaren Aggregats- und Fahrwerksteile Seitenflügel der Maschine bilden.

Ist die Maschine in der genannten Weise klappbar ausgebildet, kann das genannte Viergelenk vorteilhafterweise die klappbaren Aggregats- bzw. Fahrwerksteile aneinander anlenken, sodass die Aggregats- und Vor- bzw. Nachläuferteile durch die das Viergelenk bildende Lenkeranordnung miteinander verbunden bleiben, wenn sie in die Vorgewende- bzw. Transportstellung aufgeschwenkt bzw. umgekehrt in die Arbeitsstellung abgesenkt werden.

Um die Arbeitstiefe des Arbeitsaggregats einstellen zu können, kann eine Höheneinstellvorrichtung zum Einstellen der Höhenposition des Vor- oder Nachläuferfahrwerks relativ zum Arbeitsaggregat vorgesehen sein. Vorteilhafterweise kann eine solche Höheneinstellvorrichtung einem Teil des Nach- bzw. Vorläuferfahrwerks zugeordnet sein, der die genannte Klappbewegung in die Vorgewende- und/oder Transportstellung nicht mitmacht. Beispielsweise kann die Höheneinstellvorrichtung einem mittleren Nachläuferwalzenteil zugeordnet sein, der in seiner liegenden, quer zur Fahrtrichtung ausgerichteten Position bleibt, auch wenn die Seitenflügel der Maschine aufgewippt werden.

Die genannte Höheneinstellvorrichtung kann einerseits einen Abstützpunkt am Maschinenrahmen und andererseits einen Abstützpunkt an einem Fahrwerksträger aufweisen, wobei insbesondere ein mit Fremdenergie betätigbarer Aktor wie beispielsweise ein Hydraulikzylinder zum motorischen Einstellen der Höhenstellung des Nach- bzw. Vorläuferfahrwerks relativ zum Arbeitsaggregat vorgesehen sein kann. Der genannte Hydraulikzylinder ist unabhängig von und zusätzlich zu dem genannten längenveränderbaren Dämpferbein vorgesehen, welches als Hydraulikzylinder ausgebildet sein kann.

Die Erfindung wird nachfolgend anhand eines bevorzugten Ausführungsbeispiels und zugehörigen Zeichnungen näher erläutert. In den Zeichnungen zeigen:

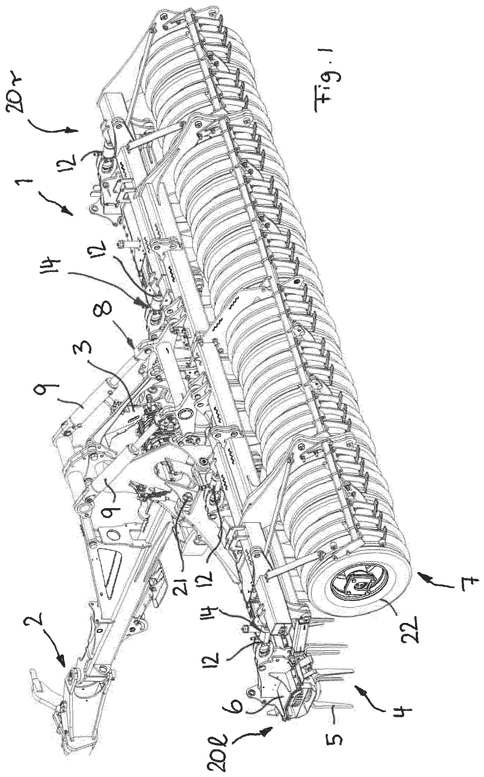

- Fig. 1:: eine perspektivische Rückansicht einer landwirtschaftlichen Arbeitsmaschine in Form eines Bodenbearbeitungsgeräts, das als Arbeitsaggregat eine Reihe von Kreiselzinken zur Bodenbearbeitung und ein dem Arbeitsaggregat nachlaufendes Nachläuferfahrwerk in Form einer Walze aufweist, die relativ zum Arbeitsaggregat höhenverstellbar ist, um die Arbeitstiefe der Kreiselzinken einzustellen,

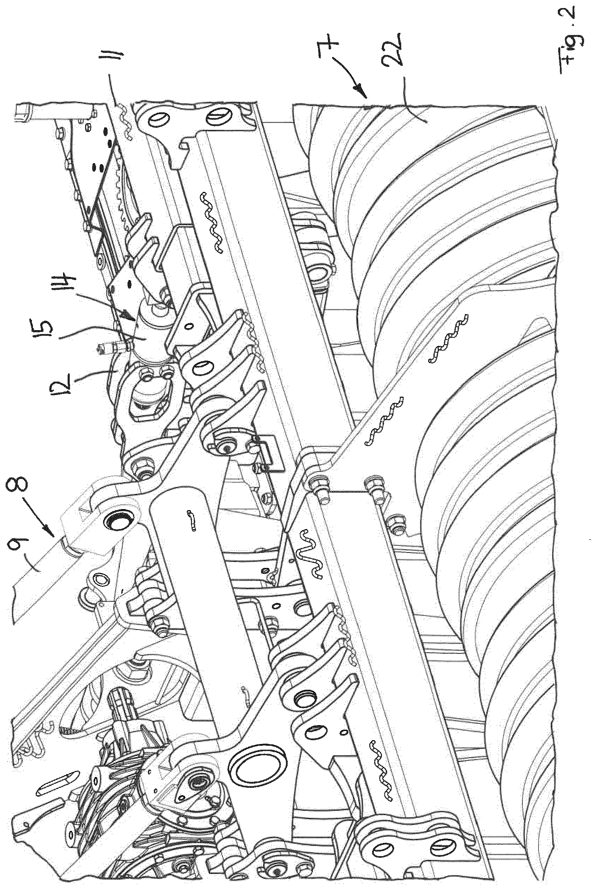

- Fig. 2:: eine ausschnittsweise, perspektivische Darstellung der Aufhängung der Nachläuferwalze, wobei einerseits die höhenverstellbare Aufhängung des Zentralteils der Walze zur Arbeitstiefeneinstellung und andererseits die Viergelenks-Aufhängung der klappbaren Außenteile der Nachläuferwalze an den klappbaren Teilen des Arbeitsaggregats gezeigt ist,

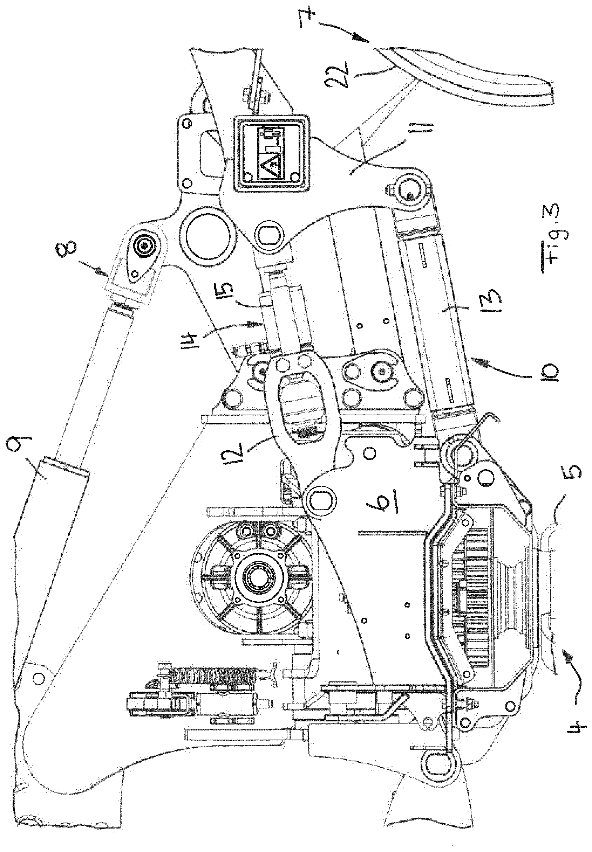

- Fig. 3 - 5:: Seitenansichten der das Viergelenk bildenden Lenkeranordnung, mittels derer das Nachläuferfahrwerk am Arbeitsaggregat höhenveränderbar aufgehängt ist, in verschiedenen Höhenstellungen, wobei der obere Lenker eines Viergelenks-Lenkerpaares als längenveränderbares Dämpferbein ausgebildet ist,

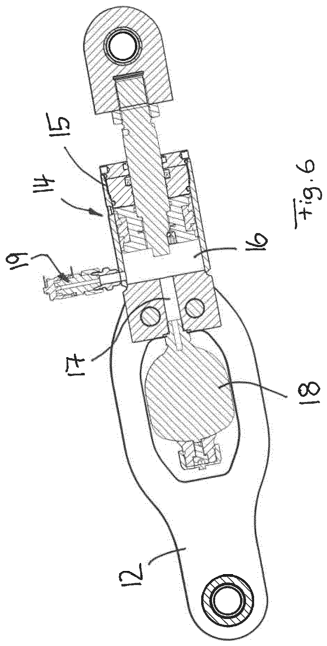

- Fig. 6:: einen Längsschnitt durch den längenveränderbaren, als Dämpferbein ausgebildeten Lenker aus den vorhergehenden Figuren mit einer pneumatischen bzw. hydraulischen Dämpfereinrichtung, und

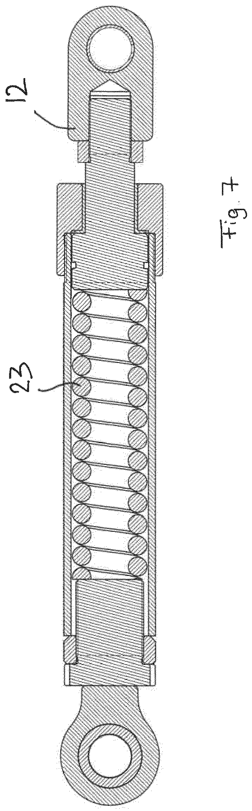

- Fig. 7:: einen Längsschnitt durch eine mechanische Variante des längenveränderbaren Dämpferbeins der Lenkeranordnung.

Wie die Figuren zeigen, kann die landwirtschaftliche Arbeitsmaschine 1 als Bodenbearbeitungsmaschine ausgebildet sein, beispielsweise in Form einer Kreiselegge, wie dargestellt, oder eines Grubbers, oder auch einer Bodenbearbeitungs-/Sämaschinenkombination. Unabhängig von der konkreten Ausbildung kann die Arbeitsmaschine 1 als Anbaugerät ausgebildet sein, die über eine Anbauvorrichtung 2 an einen nicht gezeigten Schlepper angebaut werden kann, wobei die Anbauvorrichtung 2 beispielsweise eine Deichsel oder einen Anbaubock mit einer Dreipunktanlenkung umfassen kann.

Der mit der Anbauvorrichtung 2 verbundene Maschinenrahmen 3 kann zumindest ein Arbeitsaggregat 4 tragen, wobei ggf. auch mehrere Arbeitsaggregate in Fahrtrichtung hintereinander angeordnet sein können. Das Arbeitsaggregat 4 kann eine Vielzahl von Arbeitswerkzeugen 5 umfassen, die in zumindest einer Reihe liegend quer zur Fahrtrichtung angeordnet sein können, wenn sich die Maschine in ihrer Arbeitsposition befindet. Beispielsweise können die genannten Arbeitswerkzeuge 5 Kreiselzinken aufweisen, die um aufrechte Achsen rotatorisch antreibbar sein können. Unabhängig vom Werkzeugtypus können die genannten Arbeitswerkzeuge 5 an einem Werkzeugträger 6 aufgehängt sein, der sich in der Arbeitsposition liegend quer zur Fahrtrichtung erstrecken kann.

Wie die Figuren zeigen, kann in Fahrtrichtung hinter dem Arbeitsaggregat 4 ein Nachläuferfahrwerk 7 in Form einer Walze 22 angeordnet sein, die beispielsweise als Packerradwalze ausgebildet sein kann.

Mittels des Nachläuferfahrwerks 7 kann die Arbeitstiefe des Arbeitsaggregats 4 eingestellt werden. Eine Arbeitstiefen-Einstellvorrichtung kann hierzu eine Höheneinstellvorrichtung 8 umfassen, mittels derer die Höhe von Nachläuferfahrwerk 7 und Arbeitsaggregat 4 relativ zueinander variabel, vorzugsweise stufenlos eingestellt werden kann. Die Höheneinstellvorrichtung 8 kann beispielsweise dazu vorgesehen sein, die Höhe des Nachläuferfahrwerks 7 gegenüber dem Maschinenrahmen 3 und damit gegenüber dem Arbeitsaggregat 4 zu verstellen, wobei die Höheneinstellvorrichtung 8 einen oder mehrere Stellaktoren 9 beispielsweise in Form von Hydraulikzylindern zur Höheneinstellung des Nachläuferfahrwerks 7 aufweisen kann, vgl. Figur 1 und Figur 2.

Wie die Figuren zeigen, ist das einachsige Nachläuferfahrwerk 7 mittels einer ein Viergelenk bildenden Lenkeranordnung 10 höhenveränderbar an dem Arbeitsaggregat 4 aufgehängt, wobei die genannte Lenkeranordnung 10 mehrere jeweils ein Viergelenk bildende Lenkerpaare umfassen kann, die über die Arbeitsbreite verteilt angeordnet und jeweils einen Fahrwerksträger 11 an den Werkzeugträger 6 ankoppeln können.

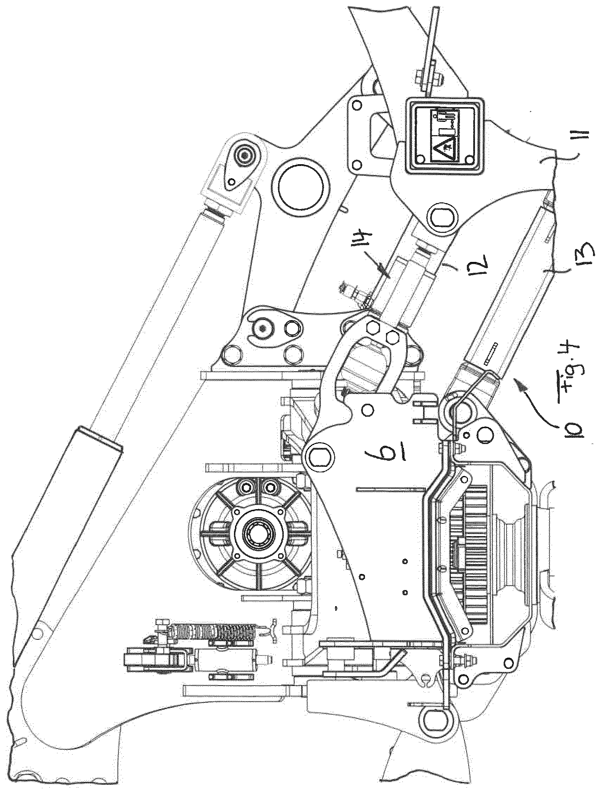

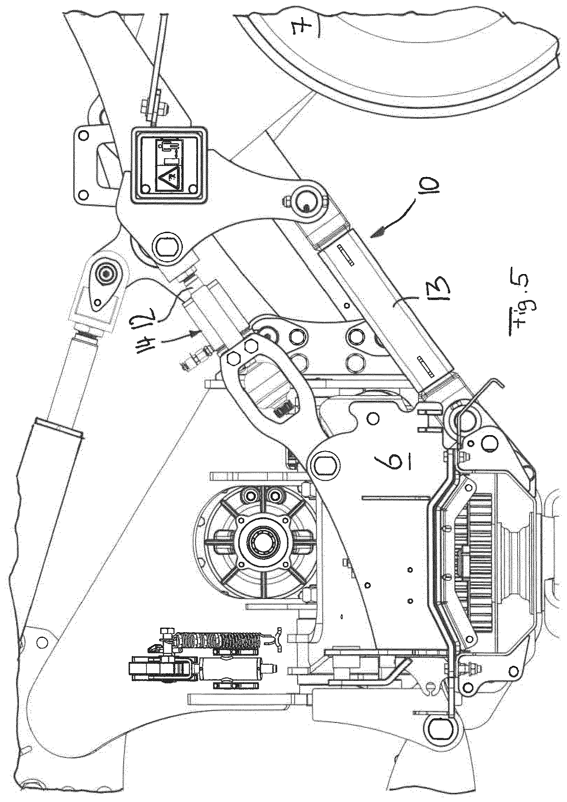

Wie insbesondere die Figuren 3 bis 5 zeigen, kann ein Viergelenks-Lenkerpaar der Lenkeranordnung 10 zwei etwa parallel zueinander angeordnete, näherungsweise gleichlange Lenker 12, 13 umfassen, die sich in einer mittleren Höhenstellung des Nachläuferfahrwerks 7 relativ zum Arbeitsaggregat 4, vgl. Figur 3, näherungsweise liegend zwischen dem Arbeitsaggregat 4 und dem Fahrwerksträger 11 erstrecken können. Aus dieser mittleren Höhenstellung kann die das Viergelenk bildende Lenkeranordnung 10 nach unten wippen, vgl. Figur 4, um die Arbeitstiefe des Arbeitsaggregats 4 zu verringern oder ggf. die Arbeitswerkzeuge 5 gänzlich vom Boden auszuheben, und andererseits nach oben wippen, vgl. Figur 5, um die Arbeitstiefe des Arbeitsaggregats 4 zu vergrößern. In der nach unten gewippten Stellung, vgl. Figur 4, können sich die Lenker 12, 13 vom Werkzeugträger 5 schräg nach unten zum Fahrwerksträger 11 erstrecken, während die Lenker 12, 13 sich in der aufgewippten Stellung, vgl. Figur 5, vom Werkzeugträger 6 schräg nach oben zum Fahrwerksträger 11 erstecken können.

Insbesondere können die Lenker 12, 13 eines Viergelenks-Lenkerpaares eine Parallelogramm-Lenkeranordnung bilden.

Wie die Figuren 3 bis 5 zeigen, ist das von der Lenkeranordnung 10 gebildete Viergelenk zwischen dem Arbeitsaggregat 4 und dem Nachläuferfahrwerk 7 als Dämpfungseinrichtung 14 ausgebildet, um stoßhafte Belastungen zwischen Nachläuferfahrwerk 7 und Arbeitsaggregat 4 zu dämpfen und das Arbeitsaggregat 4 sanft in der Höhe bzw. der gewünschten Arbeitstiefe zu führen. Einerseits dämpft die Dämpfungseinrichtung 14 Stöße vom Arbeitsaggregat 4 auf das Nachläuferfahrwerk 7, beispielsweise wenn das Arbeitsaggregat 4 auf harte Bodenpartien oder Steine aufläuft. Umgekehrt können auch Stöße vom Nachläuferfahrwerk 7 auf das Arbeitsaggregat 4 gedämpft werden, wenn das Nachläuferfahrwerk 7 auf eine Bodenunebenheit aufläuft.

Um die Dämpfungswirkung im Viergelenk zu bewirken, ist zumindest einer der Lenker 12 der Lenkeranordnung 10, genauer gesagt zumindest einer der Lenker 12 eines Viergelenks-Lenkerpaares als längenveränderbares Dämpferbein ausgebildet. Der andere Lenker 13 des jeweiligen Viergelenks-Lenkerpaares kann starr ausgebildet sein, wie dies die Figuren zeigen. Beispielsweise kann der untere Lenker 13 starr und der obere Lenker 12 als längenveränderbares Dämpferbein ausgebildet sein.

Der als längenveränderbares Dämpferbein ausgebildete Lenker 12 kann eine pneumatische und/oder hydraulische und/oder mechanische Dämpfungseinrichtung zum Dämpfen von Längenänderungen des Lenkers 12 aufweisen. Insbesondere kann der Lenker 12 teleskopierbar ausgebildet sein, vorzugsweise als teleskopierbare Zylindereinheit.

Bei pneumatischer oder hydraulischer Ausbildung, vgl. Figur 6, kann der Lenker 12 eine Kolbenzylindereinheit 15 mit einer Verdrängerkammer aufweisen, aus der bei Längenänderungen des Dämpferbeins Fluid, insbesondere Hydrauliköl, über einen strömungsrestriktiven Verdrängungskanal zu verdrängen ist. Beispielsweise kann der Verdrängungskanal 17 mit einem Druckspeicher 18 verbunden sein, der das verdrängte Fluid aufnehmen kann und der die Kolbenzylindereinheit 15 in eine definierte Ausgangsstellung vorspannen kann.

Wie Figur 6 zeigt, kann der Verdrängungskanal 17 beispielsweise axial durch den Boden des Zylinders hindurchgehen und der Druckspeicher 18 axial an die Kolbenzylindereinheit 15 anschließen.

Alternativ oder zusätzlich kann aber auch ein radial abgehender Kanal als Verdrängungskanal genutzt werden, wobei der radiale Fluidanschluss 19 aber auch dem Befüllen des Systems und damit der Einstellung der Vorspannkraft dienen kann.

Unabhängig von der Erstreckung des Kanals axial durch einen Zylinderboden oder radial durch einen Zylindermantel kann anstelle eines Druckspeichers 18 auch eine Anbindung an eine schlepperseitige Druckwelle vorgesehen sein, um das System von der Druckwelle her Druck zu beaufschlagen.

Vorteilhafterweise ist das längenveränderbare Dämpferbein des Lenkers 12 in eine definierte Ausgangsstellung vorgespannt, aus der der Lenker 12 entweder nur verkürzt oder nur gelenkt werden kann, je nachdem, wie die Lenkeranordnung 10 beschaffen und angeordnet ist und welche Aufhängungskräfte über die Lenkeranordnung 10 zwischen Arbeitsaggregat 4 und Nachläuferfahrwerk 7 übertragen werden. Insbesondere kann der Lenker 12 aus der vorgespannten Ausgangsstellung nur verkürzt werden, sodass bei stoßhaften Belastungen auf das Arbeitsaggregat 4 und/oder auf das Nachläuferfahrwerk 7 der Lenker 12 zusammenfahren bzw. sich verkürzen kann, um Stöße zu dämpfen.

Wie die Figuren zeigen, kann die das Viergelenk bildende Lenkeranordnung 10 mit der Dämpfungseinrichtung 14 insbesondere zwischen klappbaren Aggregats- und Fahrwerksteilen des Arbeitsaggregats 4 und des Nachläuferfahrwerks 7 vorgesehen sein. Insbesondere können Seitenflügel 201 und 20r des Arbeitsaggregats 4 und des Nachläuferfahrwerks 7 zusammen um eine liegende, in Fahrtrichtung weisende Schwenkachse 21 aus der in Figur 1 gezeigten, abgesenkten Arbeitsstellung in eine näherungsweise aufrechte Vorgewende- und/oder Transportstellung aufgewippt werden, um die Arbeitsbreite der Maschine zu verkleinern, beispielsweise für den Straßentransport oder eine Abstellposition.

Die das Viergelenk bildende Lenkeranordnung 10 mit den mehreren, über die Arbeitsbreite verteilten Lenkerpaaren 12, 13 ist dabei zwischen den in die Transportstellung aufwippbaren Aggregats- bzw. Fahrwerksteilen vorgesehen.

Insbesondere können die vorgenannten Werkzeugträger 6 und Fahrwerksträger 11 geteilt bzw. mehrteilig ausgebildet sein, wobei äußere Trägerteile um die genannte Schwenkachse 21 schwenkbar am Maschinenrahmen 3 gelagert sein können. Die genannte Lenkeranordnung 10 ist dabei zwischen den schwenkbar gelagerten Teilen der Werkzeug- und Fahrwerksträger 6, 11 vorgesehen, vgl. Figur 1.

## Patentansprüche

1. Landwirtschaftliche Arbeitsmaschine, insbesondere Bodenbearbeitungsmaschine wie Egge oder Grubber, mit einem Maschinenrahmen (3), einem am Maschinenrahmen (3) aufgehängten Arbeitsaggregat (4) sowie einem einachsigen Nach- oder Vorläuferfahrwerk (7) mit einer Walze (22) oder einem Transportrad, wobei das Nach- oder Vorläuferfahrwerk (7) mittels einer ein Viergelenk bildenden Lenkeranordnung (10) am Arbeitsaggregat (4) höhenveränderbar angelenkt ist, **dadurch gekennzeichnet, dass** das Viergelenk als Dämpfungseinrichtung (14) ausgebildet ist und zumindest einer der Lenker (12) eines Viergelenks-Lenkerpaares der Lenkeranordnung (10) als längenveränderbares Dämpferbein ausgebildet ist.

2. Landwirtschaftliche Arbeitsmaschine nach dem vorhergehenden Anspruch, wobei der längenveränderbare Lenker (12) eine vorgespannte Ausgangsstellung besitzt, die der Lenker (12) im Arbeitsbetrieb ohne Stoßbelastungen einnimmt, wobei der genannte Lenker (12) aus der vorgespannten Ausgangsstellung entweder nur verkürzbar oder nur verlängerbar ist.

3. Landwirtschaftliche Arbeitsmaschine nach dem vorhergehenden Anspruch, wobei der als Dämpferbein ausgebildete Lenker (12) aus seiner vorgespannten Ausgangsstellung nur verkürzbar ist, und vorzugsweise derart in der Viergelenks-Lenkeranordung (10) verbaut ist, das er im Arbeitsbetrieb, insbesondere bei stoßhaften Arbeitsbelastungen auf das Nach- oder Vorlaäuferfahrwerk, auf Druck belastet ist.

4. Landwirtschaftliche Arbeitsmaschine nach einem der vorhergehenden Ansprüche, wobei das längenveränderbare Dämpferbein als Fluiddämpfer ausgebildet ist und eine Kolbenzylindereinheit (15) mit einer Verdrängerkammer (16) aufweist, aus der bei Längenänderungen des Dämpferbeins Fluid über einen strömungsrestriktiven Verdrängungskanal (17) zu verdrängen ist.

5. Landwirtschaftliche Arbeitsmaschine nach dem vorhergehenden Anspruch, wobei ein Druckspeicher (18) an die Verdrängerkammer (16) angeschlossen ist und die Verdrängerkammer (16) zum Vorspannen des Lenkers (12) in seiner Ausgangsstellung mit Druck beaufschlagt.

6. Landwirtschaftliche Arbeitsmaschine nach einem der beiden vorhergehenden Ansprüche, wobei die Verdrängerkammer (16) mit einem Druckanschluss (19) zum Beaufschlagen der Verdrängerkammer (16) mit Druck von einer Druckquelle her und zum Einstellen der Vorspannung des Lenkers (12) in dessen Ausgangsstellung verbunden ist.

7. Landwirtschaftliche Arbeitsmaschine nach einem der beiden vorhergehenden Ansprüche, wobei der genannte Druckspeicher (18) axial an ein Ende der Kolbenzylindereinheit (15) anschließt und in einem Innenraum des längenveränderbaren Dämpferbeins aufgenommen ist.

8. Landwirtschaftliche Arbeitsmaschine nach einem der vorhergehenden Ansprüche, wobei das längenveränderbare Dämpferbein eine mechanische Feder (23) zum Vorspannen des Lenkers (12) in dessen Ausgangsstellung aufweist und das Dämpferbein als Federbein ausgebildet ist.

9. Landwirtschaftliche Arbeitsmaschine nach einem der vorhergehenden Ansprüche, wobei das längenveränderbare Dämpferbein eine Rückstellvorrichtung aufweist, die in der unausgelenkten Ausgangsstellung des Dämpferbeins im Wesentlichen die volle, über den Verstellweg des Dämpferbeins im wesentlichen gleichbleibende Rückstellkraft bereitstellt.

10. Landwirtschaftliche Arbeitsmaschine nach dem vorhergehenden Anspruch, wobei die Rückstelleinrichtung hinsichtlich der in der Ausgangsstellung wirkenden Rückstellkraft einstellbar ausgebildet ist.

11. Landwirtschaftliche Arbeitsmaschine nach einem der vorhergehenden Ansprüche, wobei das Arbeitsaggregat (4) und das Nach- oder Vorläuferfahrwerk (7) schwenkbar gelagerte Aggregats- und Fahrwerksteile (20l, 20r) umfassen, die aus einer Arbeitsstellung um eine Schwenkachse (21) in eine, vorzugsweise aufrechte, Vorgewende- und/oder Transportstellung schwenkbar sind, wobei die das Viergelenk bildende Lenkeranordnung (10) zwischen den klappbaren Aggregats- und Fahrwerksteilen (20l, 20r) vorgesehen ist und zusammen mit den genannten Aggregats- und Fahrwerksteilen zwischen den genannten Arbeits- und Vorgewende- und/oder Transportstellungen schwenkbar ist.

12. Landwirtschaftliche Arbeitsmaschine nach einem der vorhergehenden Ansprüche, wobei eine Arbeitstiefeneinstellungsvorrichtung zum Einstellen der Arbeitstiefe des Arbeitsaggregats (4) eine Höheneinstellvorrichtung (8) zum variablen Einstellen der Höhe von Nach- oder Vorläuferfahrwerk (7) und Arbeitsaggregat (4) relativ zueinander aufweist, wobei die Höheneinstellvorrichtung (8) einen Stellaktor unabhängig von und zusätzlich zu der Lenkeranordnung (10) aufweist.

13. Landwirtschaftliche Arbeitsmaschine nach dem vorhergehenden Anspruch, wobei die Höheneinstellvorrichtung (8) einen Mittelteil des Nach- oder Vorläuferfahrwerks (7) relativ zum Maschinenrahmen (3) höhenverstellt, wobei der genannte mittlere Nach- oder Vorläuferfahrwerksteil ein Verschwenken anderer Fahrwerksteile in eine Vorgewende- und/oder Transportstellung nicht mitmacht und/oder auch in der Transportstellung der Maschine liegend quer zur Fahrtrichtung ausgerichtet bleibt.

14. Landwirtschaftliche Arbeitsmaschine nach einem der vorhergehenden Ansprüche, wobei die Lenkeranordnung (10) als Parallelogramm-Lenkeranordnung ausgebildet ist.

15. Landwirtschaftliche Arbeitsmaschine nach einem der vorhergehenden Ansprüche, wobei die Lenkeranordnung (10) mehrere über die Arbeitsbreite verteilt angeordnete Lenkerpaare (12, 13) umfasst, die jeweils ein Viergelenk definieren, wobei jedes der genannten Viergelenks-Lenkerpaare einen als längenveränderbares Dämpferbein ausgebildeten Dämpferbein (12) und einen starren Lenker (13) aufweist.

## Claims

1. An agricultural machine, in particular a tillage machine such as a harrow or cultivator, comprising a machine frame (3), a working assembly (4) suspended from the machine frame (3), and a single-axle trailer chassis or lead chassis (7) having a roller (22) or a transport wheel, wherein the trailer chassis or lead chassis (7) is height-adjustably coupled to the working assembly (4) by means of a linkage (10) forming a four-bar mechanism, **characterised in that** the four-bar mechanism is designed as a damping device (14) and at least one of the links (12) of a four-bar link pair of the linkage (10) is designed as a length-adjustable damper strut.

2. The agricultural machine according to the preceding claim, wherein the length-adjustable link (12) has a preloaded initial position which the link (12) assumes when operating without impact loads, wherein said link (12) can either only be shortened or only be lengthened from the preloaded initial position.

3. The agricultural machine according to the preceding claim, wherein the link (12) designed as a damper strut can only be shortened from its preloaded initial position, and is preferably installed in the four-bar linkage (10) in such a way that it is subjected to compressive loading during operation, particularly in the case of impact loading on the trailer chassis or lead chassis.

4. The agricultural machine according to one of the preceding claims, wherein the length-adjustable damper strut is designed as a fluid damper and has a pistoncylinder unit (15) having a displacement chamber (16), from which fluid is to be displaced via a flow-restricting displacement channel (17) when the length of the damper strut is changed.

5. The agricultural machine according to the preceding claim, wherein a pressure accumulator (18) is connected to the displacement chamber (16) and applies pressure to the displacement chamber (16) in order to preload the link (12) in its initial position.

6. The agricultural machine according to one of the two preceding claims, wherein the displacement chamber (16) is connected to a pressure port (19) in order to apply pressure to the displacement chamber (16) from a pressure source and to adjust the preloading of the link (12) in its initial position.

7. The agricultural machine according to one of the two preceding claims, wherein said pressure accumulator (18) axially adjoins one end of the pressure-cylinder unit (15) and is accommodated in an interior of the length-adjustable damper strut.

8. The agricultural machine according to one of the preceding claims, wherein the length-adjustable damper strut has a mechanical spring (23) for preloading the link (12) in its initial position and the damper strut is designed as a suspension strut.

9. The agricultural machine according to one of the preceding claims, wherein the length-adjustable damper strut has a restoring device which in the undeflected initial position of the damper strut provides substantially the entire restoring force, which remains substantially constant over the adjustment path of the damper strut.

10. The agricultural machine according to the preceding claim, wherein the restoring device is designed to be adjustable in terms of the restoring force acting in the initial position.

11. The agricultural machine according to one of the preceding claims, wherein the working assembly (4) and the trailer chassis or lead chassis (7) comprise swivel-mounted assembly and chassis parts (20l, 20r), which can swivel from a working position around a swivel axis (21) into a preferably upright headland position and/or transport position, wherein the linkage (10) forming the four-bar mechanism is provided between the folding assembly and chassis parts (20l, 20r) and together with said assembly and chassis parts can be swivelled between said working and headland positions and/or transport positions.

12. The agricultural machine according to one of the preceding claims, wherein a working depth adjusting device for adjusting the working depth of the working assembly (4) has a height adjusting device (8) for variably adjusting the height of the trailer chassis or lead chassis (7) and the working assembly (4) relative to one another, wherein the height adjusting device (8) has an actuator that is independent of and in addition to the linkage (10).

13. The agricultural machine according to the preceding claim, wherein the height adjusting device (8) adjusts the height of a central part of the trailer chassis or lead chassis (7) relative to the machine frame (3), wherein said central trailer chassis or lead chassis part is not involved in swivelling other chassis parts into a headland and/or transport position and/or remains oriented transversely to the direction of travel even in the transport position of the machine.

14. The agricultural machine according to one of the preceding claims, wherein the linkage (10) is designed as a parallelogram linkage.

15. The agricultural machine according to one of the preceding claims, wherein the linkage (10) comprises a plurality of link pairs (12, 13) distributed across the working width, each link pair defining a four-bar mechanism, wherein each of said four-bar link pairs has a damper strut (12) designed as a length-adjustable damper strut and a fixed link (13).

## Revendications

1. Machine de travail agricole, en particulier machine de travail du sol telle qu'une herse ou un cultivateur, comportant un bâti de machine (3), une unité de travail (4) accrochée au bâti de machine (3) ainsi qu'un mécanisme de déplacement antérieur ou postérieur (7) doté d'un rouleau (22) ou d'une roue de transport, le mécanisme de déplacement antérieur ou postérieur (7) étant articulé de manière modifiable en hauteur sur l'unité de travail (4) au moyen d'un agencement de barres (10) formant un quadrilatère articulé, **caractérisée en ce que** le quadrilatère articulé est réalisé sous la forme d'un dispositif d'amortissement (14) et au moins une des barres (12) d'une paire de barres de quadrilatère articulé de l'agencement de barres (10) est réalisée sous la forme d'une jambe de force amortie modifiable en longueur.

2. Machine de travail agricole selon la revendication précédente, dans laquelle la barre (12) modifiable en longueur possède une position initiale précontrainte que la barre (12) occupe en régime de travail sans contraintes de chocs, ladite barre (12) pouvant être soit uniquement raccourcie soit uniquement rallongée à partir de la position initiale précontrainte.

3. Machine de travail agricole selon la revendication précédente, dans laquelle la barre (12) réalisée sous la forme d'une jambe de force amortie ne peut être que raccourcie depuis sa position initiale précontrainte, et est de préférence montée de telle manière dans l'agencement de barres formant quadrilatère articulé (10) que, en régime de travail, elle est soumise à une contrainte de pression en particulier lors de contraintes de travail de type chocs sur le mécanisme de déplacement antérieur ou postérieur.

4. Machine de travail agricole selon l'une des revendications précédentes, dans laquelle la jambe de force amortie modifiable en longueur est réalisée sous la forme d'un amortisseur à fluide et présente un ensemble piston et cylindre (15) doté d'une chambre de déplacement (16) depuis laquelle, lors de modifications de la longueur de la jambe de force amortie, du fluide est à déplacer par le biais d'un canal de déplacement (17) à action restrictive sur l'écoulement.

5. Machine de travail agricole selon la revendication précédente, dans laquelle un accumulateur hydraulique (18) est raccordé à la chambre de déplacement (16) et sollicite la chambre de déplacement (16) en pression pour précontraindre la barre (12) dans sa position initiale.

6. Machine de travail agricole selon l'une des deux revendications précédentes, dans laquelle la chambre de déplacement (16) est reliée à un raccord de pression (19) destiné à la sollicitation en pression de la chambre de déplacement (169 à partir d'une source de pression et au réglage de la précontrainte de la barre (12) dans sa position initiale.

7. Machine de travail agricole selon l'une des deux revendications précédentes, dans laquelle ledit accumulateur hydraulique (18) se trouve dans le prolongement axial d'une extrémité de l'ensemble piston et cylindre (15) et est reçu dans un espace intérieur de la jambe de force amortie modifiable en longueur.

8. Machine de travail agricole selon l'une des revendications précédentes, dans laquelle la jambe de force amortie modifiable en longueur présente un ressort mécanique (23) destiné à précontraindre la barre (12) dans sa position initiale et la jambe de force amortie est réalisée sous la forme d'une jambe de force à ressort.

9. Machine de travail agricole selon l'une des revendications précédentes, dans laquelle la jambe de force amortie modifiable en longueur présente un dispositif de rappel qui fournit, dans la position initiale non déplacée de la jambe de force amortie, sensiblement la totalité de la force de rappel sensiblement constante sur la course de déplacement de la jambe de force amortie.

10. Machine de travail agricole selon la revendication précédente, dans laquelle le dispositif de rappel est réalisé de manière réglable en ce qui concerne la force de rappel agissant dans la position initiale.

11. Machine de travail agricole selon l'une des revendications précédentes, dans laquelle l'unité de travail (4) et le mécanisme de déplacement antérieur ou postérieur (7) comprennent des pièces d'unité et de mécanisme de déplacement (20l, 20r) montées pivotantes qui peuvent pivoter autour d'un axe de pivotement (21) depuis une position de travail dans une position de tournière et/ou de transport de préférence verticale, l'agencement de barres (10) formant le quadrilatère articulé étant situé entre les pièces d'unité et de mécanisme de roulement (20l, 20r) rabattables et pouvant être pivoté conjointement avec lesdites pièces d'unité et de mécanisme de roulement entre lesdites positions de travail et de tournière et/ou de transport.

12. Machine de travail agricole selon l'une des revendications précédentes, dans laquelle un dispositif de réglage de profondeur de travail destiné à régler la profondeur de travail de l'unité de travail (4) présente un dispositif de réglage en hauteur (8) destiné à régler de manière variable la hauteur du mécanisme de déplacement antérieur ou postérieur (7) et de l'unité de travail (4) l'un par rapport à l'autre, le dispositif de réglage en hauteur (8) présentant un actionneur de réglage indépendant de l'agencement de barres (10) et supplémentaire à celui-ci.

13. Machine de travail agricole selon la revendication précédente, dans laquelle le dispositif de réglage en hauteur (8) règle en hauteur une partie centrale du mécanisme de déplacement antérieur ou postérieur (7) par rapport au bâti de machine (3), ladite pièce centrale de mécanisme de déplacement antérieur ou postérieur ne pivotant pas conjointement avec d'autres parties de mécanisme de déplacement dans une position de tournière et/ou de transport et/ou demeurant orientée à l'horizontale transversalement au sens de la marche même dans la position de transport de la machine.

14. Machine de travail agricole selon l'une des revendications précédentes, dans laquelle l'agencement de barres (10) est réalisé sous la forme d'un agencement de barres en parallélogramme.

15. Machine de travail agricole selon l'une des revendications précédentes, dans laquelle l'agencement de barres (10) comprend plusieurs paires de barres (12, 13) agencées réparties sur la largeur de travail, qui définissent respectivement un quadrilatère articulé, chacune desdites paires de barres du quadrilatère articulé présentant une jambe de force amortie (12) réalisée sous la forme d'une jambe de force amortie modifiable en longueur et une barre rigide (13).
